# EUROPÄISCHE PATENTSCHRIFT

(11) **EP 1 192 854 B1**
(45) Veröffentlichungstag und Bekanntmachung des Hinweises auf die Patenterteilung: **22.12.2004**
(21) Anmeldenummer: 00121604.3
(22) Anmeldetag: 02.10.2000
(51) Int. Cl.: A01G 25/06

(54) **Bewässerungssystem**
Irrigation system
Système d'irrigation

(43) Veröffentlichungstag der Anmeldung: 03.04.2002
(73) Patentinhaber: Thomas J.C. Matzen GmbH, 20148 Hamburg (DE)
(72) Erfinder: De Tavares, Joaquim, E-07014 Palma de Mallorca (ES)
(74) Vertreter: Glawe, Delfs, Moll & Partner

(56) Entgegenhaltungen:
- EP-A- 0 136 476
- WO-A-97/43895
- DE-U- 29 711 236
- FR-A- 2 471 740
- US-A- 1 401 386
- US-A- 4 583 880
- US-A- 5 761 846

## Beschreibung

Die Erfindung betrifft ein Bewässerungssystem mit einer Mehrzahl von unterirdisch anzuordnenden Bewässerungskörpern, die jeweils einen mit Wasser füllbaren Hohlraum und eine Einrichtung zum dosierten Abgeben von Wasser aus diesem Hohlraum in das umgebende Erdreich aufweisen.

Ein solches Bewässerungssystem ist aus der EP 0 136 476 A2 bekannt. Die Ausführungsform gemäß Fig. 1 bis 3 zeigt zylindrische Bewässerungskörper aus einer porösen Keramik mit einer durchschnittlichen Porengröße von beispielsweise 3 µm. Ein Keramikelement weist zwei Wasseranschlüsse auf, die mit einem Schlauchende verbindbar sind und zur seriellen Verschaltung der Keramikelemente zur Feldbewässerung dienen können. Das Wasser fließt innerhalb der Keramikelemente durch eine Mittelbohrung und kann durch die Poren der keramischen Wände in das Erdreich austreten. Die Menge der austretenden Flüssigkeit soll durch Kapillarkräfte in Abhängigkeit des natürlichen Wasserbedarfs der Pflanze geregelt sein.

Aus der US 1,401,386 ist eine unterirdische Serienanordnung von porösen, kugelförmigen Bewässerungskörpern bekannt. Das Wasser wird mit Hilfe der Schwerkraft oder durch Druckbeaufschlagung in das Erdreich gefördert. Die Bewässerungskörper sollen so porös wie möglich ausgeführt sein. Die Versorgung der Bewässerungskörper erfolgt über eine Öffnung am höchstgelegenen Punkt der Kugel.

Bekannt ist ein Bewässerungsautomat für Zimmer- und Balkonpflanzen (DE 297 11 236 U1), bestehend aus einem Wassertank, der mit dem oberen Teil eines wasserdurchlässigen Behälters beispielsweise aus Ton mittels eines Wasserschlauches verbunden ist. Beim Füllvorgang wird zunächst der Behälter vollständig gefüllt, bevor das Wasser von oben in den Wassertank überläuft. Damit wird sichergestellt, daß der Behälter im Betrieb mit Wasser gefüllt und luftleer ist. Die Pflanze entzieht dem Boden Wasser und verändert damit das osmotische Gleichgewicht zwischen dem Behälterinnenraum und dem Erdreich. Um den Druckausgleich herzustellen, wird Wasser aus dem Behälter entzogen. Aufgrund des Luftabschlusses wird Wasser aus dem Tank in den Behälter nachgesaugt.

Aufgabe der vorliegenden Erfindung ist es, ein eingangs genanntes Bewässerungssystem zu schaffen, das zur großflächigen Bewässerung geeignet ist und gegenüber herkömmlichen Systemen einen geringeren Wasserverbrauch aufweist und/oder eine effizientere Bewässerung ermöglicht.

Die Erfindung sieht zu diesem Zweck eine die folgenden Merkmale vor:
- Jeder Bewässerungskörper weist jeweils eine erste und eine zweite Wassereinlaßöffnung auf;
- jeder Bewässerungskörper ist selbstentlüftend ausgebildet, wenn er in Betriebsstellung durch die erste Einlaßöffnung mit Wasser gespeist wird;
- die Mehrzahl von Bewässerungskörpern ist dergestalt in Serie geschaltet, daß jeweils die zweite Einlaßöffnung eines Bewässerungskörpers über Verbindungsleitungen mit der ersten Einlaßöffnung des vorgeschalteten Bewässerungskörpers verbunden ist;
- die miteinander verbundenen Bewässerungskörper sind mit einer Wasserspeiseeinrichtung verbunden,
- die Wasserabgabeeinrichtung eines Bewässerungskörpers wird von einer mindestens teilweise semipermeablen Membran gebildet.

Zunächst seien einige der verwendeten Begriffe erläutert.

Eine Einrichtung zum dosierten Abgeben von Wasser ist eine solche Einrichtung, bei der die Abgabe von Wasser mindestens teilweise in Abhängigkeit von Parametern erfolgt, die mit dem Wasserbedarf der zu bewässernden Pflanzen in Zusammenhang stehen. Dabei kann es sich beispielsweise um den Wassergehalt oder die Salzionen-Konzentration des Erdreichs in der Nähe der Dosiereinrichtung handeln. Charakteristisch für die Dosiereinrichtung ist eine Steuerungs- oder Regelfunktion. Sie unterscheidet sich von solchen Wasserabgabeeinrichtungen, bei denen die Wasserabgabe ausschließlich vom Wasserdruck im Hohlraum abhängt.

Das einen Bewässerungskörper umgebende Erdreich ist die Substanz, die das Wasser von den Bewässerungskörpern zu der zu bewässernden Oberfläche leitet, unabhängig von dem speziellen Material oder eine sonstigen Beschaffenheit. In der Regel wird es sich um natürlichen Boden handeln, während auch künstlicher Boden nicht ausgeschlossen ist.

Die Betriebsstellung eines Bewässerungskörpers ist diejenige Position im Boden, die er im normalen Bewässerungsbetrieb einnimmt. Zweckmäßigerweise sind die Wasserabgabeeinrichtungen in der Betriebsstellung zu dem zu bewässernden Teil des umgebenden Erdreichs hin orientiert, in der Regel also zur Erdoberfläche hin. Die Eigenschaft der Selbstentlüftung ist genauer nicht auf die Betriebsstellung als solche, sondern auf eine der Betriebsstellung entsprechenden Orientierung des Bewässerungskörpers im Raum bezogen.

Die Verbindungsleitungen zur Verbindung der in Serie geschalteten Bewässerungskörper sind zur Wasserleitung zwischen den jeweiligen Hohlräumen der Bewässerungskörper ausgebildet. Zweckmäßigerweise handelt es sich um Schlauchteile. Flexible Schlauchteile sind günstig erhältlich und leicht zu verlegen.

Die Erfindung strebt eine selbstregulierende Bodenbewässerung im wesentlichen ohne externe Druckbeaufschlagung der Wasserversorgung an. Die Dosiereinrichtung gibt Wasser vom Hohlraum in das umgebende Erdreich nicht unkontrolliert ab, sondern mindestens teilweise in Abhängigkeit von Parametern, die mit dem Wasserbedarf der zu bewässernden Pflanzen korrelieren. Dies geschieht automatisch. Das aus dem Hohlraum abfließende Wasser saugt über die Verbindungsleitungen und zwischengeschaltete Bewässerungskörper Wasser aus der Wasserspeiseeinrichtung an. Da das Wasser aus der Wasserspeiseeinrichtung nachgesaugt wird, kann auf zusätzliche Einrichtungen zur Wasserförderung, beispielsweise durch Druckbeaufschlagung verzichtet werden und die Wasserabgabe erfolgt in Abhängigkeit des Wasserverbrauchs der Pflanzen. Diese selbstregulierende Bewässerung ist sehr sparsam im Verhältnis zu einer ungeregelten Bewässerung.

Zu diesem Zweck wird die Wasserabgabeeinrichtung eines Bewässerungskörpers erfindungsgemäß von einer mindestens teilweise semipermeablen Membran gebildet. Dieser Begriff ist funktionell zu verstehen und es fällt darunter jede Membran oder Wand (nachfolgend gemeinsam als Membran bezeichnet), deren Durchlässigkeit für die im Erdreich gelösten Salzionen geringer ist als für Wasser. Es ist also insbesondere nicht gefordert, daß die Membran für die gelösten Ionen undurchlässig sein müßte. Ein Durchlässigkeitsunterschied von 20 % kann bereits genügen; er beträgt vorzugsweise mindestens 50 %, weiter vorzugsweise mindestens 80 %. Die Erfindung hat erkannt, daß der osmotische Druck anstelle der oder neben den Kapillarkräften eine treibende Kraft für eine selbstregulierende Bodenbewässerung sein kann. Insbesondere ist ein Zusammenhang des Wasserbedarfs der Pflanzen mit der Salzionen-Konzentration im umgebenden Erdreich gegeben. Die Selbstregulierungsfunktion des Bewässerungssystems wird daher verbessert, wenn die Membran mindestens teilweise semipermeable Eigenschaften aufweist.

Die Erfindung sieht vor, daß jeder Bewässerungskörper selbstentlüftend ausgebildet ist, wenn er in Betriebsstellung durch die erste Einlaßöffnung mit Wasser gespeist wird. Dieses Merkmal ermöglicht es, daß bei der Erstbefüllung einer in Serie geschalteten Anordnung von Bewässerungskörpern eine Entlüftung der gesamten Anordnung erfolgt und keine luftgefüllten Hohlräume im System verbleiben. Luftgefüllte Hohlräume in den Bewässerungskörpern sind nachteilig, da sie die mit Wasser versorgte Membranoberfläche verringern und die Bewässerungseffizienz verschlechtern. Besondere Vorteile ergeben sich für ein Bewässerungssystem im wesentlichen ohne Wasserdruckbeaufschlagung. Aufgrund des Luftabschlusses ist dann sichergestellt, daß aus einem Hohlraum abgegebenes Wasser aus der Wasserspeiseeinrichtung nachgesaugt wird. Im Gegensatz dazu können verbleibende Luftblasen im System dazu führen, daß der Wasserfluß von der Wasserspeiseeinrichtung in das Erdreich unterbrochen wird und das System zum Erliegen kommt.

Erwünscht ist eine möglichst vollständige Entlüftung der Bewässerungskörper. Eine nicht ganz vollständige Entlüftung kann hingenommen werden, solange der Wasserfluß im System nicht durch Luftblasen zum Erliegen kommt und etwaige Luftblasen die Wasserabgabe durch die semipermeablen Membranen nicht oder nur unwesentlich beeinträchtigen.

Vorzugsweise ist ein Bewässerungskörper bezüglich einer Speisung durch jeweils beide Einlaßöffnungen selbstentlüftend ausgebildet. Dann muß bei der Verschaltung der Bewässerungskörper nicht auf eine Durchflußrichtung geachtet werden.

Grundsätzlich umfaßt die Erfindung Bewässerungskörper mit beliebig geformtem Hohlraum. Ggf. ist die Erfindung von einer solchen Hohlraumform abzugrenzen, die selbstentlüftend ausgebildet ist, ohne daß es dazu weiterer Maßnahmen bedarf. Es handelt sich dabei um ein Rohr, dessen Querschnitt demjenigen der Verbindungsleitungen entspricht, wobei darin auch die Form der Einlaßöffnungen und ggf. weiterer Verbindungsmittel umfaßt ist. Falls nämlich der lichte Querschnitt von einer Verbindungsleitung durch einen Bewässerungskörper zu der nachfolgenden Verbindungsleitung nicht oder kaum verändert und insbesondere keine unstetige Querschnittsänderung aufweist, dann werden vorhandene Luftblasen bei der Erstbefüllung aus den Bewässerungskörpern ebenso wie aus den Verbindungsleitungen ausgetrieben. Es ist bei dieser speziellen Form nicht notwendig, die Bewässerungskörper zusätzlich im Hinblick auf die Selbstentlüftung einzurichten. Der Fachmann versteht den Begriff "Hohlraum" in einem davon abgegrenzten Sinn. Denn bei einer Hohlraumgestalt, die im wesentlichen eine Fortführung der Verbindungsleitung durch einen Bewässerungskörper darstellt, ist eine Entlüftungsproblematik offensichtlich nicht gegeben. Der Fachmann sieht also nur solche Räume als Hohlräume im Sinne der Erfindung an, deren Gestalt von einer im wesentlichen von der ersten zur zweiten Einlaßöffnung durchlaufenden Fortführung der Verbindungsleitungen abweicht. Dies gilt unabhängig von dem speziellen Verlauf einer solchen durchgehenden Leitung im Innern des Bewässerungskörpers.

Die Abweichung der Gestalt des Hohlraums von einer durchgehenden Leitung ist auch vorteilhaft. Insbesondere beträgt die horizontale laterale Ausdehnung des Hohlraums vorzugsweise mindestens zehnmal soviel wie der Durchmesser der Verbindungsleitungen. "Lateral" ist dabei auf die Achse bezogen, die durch die fortlaufenden Verbindungsleitungen definiert ist und die man sich innerhalb der Bewässerungskörper so vorzustellen hat, als würde die Verbindungsleitung durch den Bewässerungskörper von der ersten zur zweiten Einlaßöffnung durchlaufen. Diese Achse muß nicht etwa mit der Flußrichtung des Wassers zusammenfallen. Beim Durchmesser der Verbindungsleitungen handelt es sich zweckmäßigerweise um einen mittleren Innendurchmesser. Unter der lateralen Ausdehnung des Hohlraums ist nicht unbedingt eine lichte Weite zu verstehen, sondern um den Abstand zweier Punkte des Hohlraums voneinander, die jeweils den größten Abstand zur Achse aufweisen. Je größer die genannte Ausdehnung ist, um so größer kann die pro axialer Länge zur Verfügung stehende Fläche der wasserabgebenden Membran sein. Eine Vergrößerung der wasserabgebenden Oberfläche ermöglicht eine Vergrößerung des jeweils bewässerten Bereichs und führt damit zu einer Steigerung der Bewässerungseffizienz. Insbesondere kann eine gegebene zu bewässernde Fläche mit einer geringeren Anzahl von Bewässerungskörpern versorgt werden, was eine Kostenersparnis mit sich bringt. Beispielsweise kann bei einer Anordnung des Systems in einer Schlangenlinie der Abstand zweier parallel zueinander verlaufender Linien vergrößert werden.

Vorteilhaft ist auch eine gegenüber dem Verbindungsleitungsdurchmesser vergrößerte vertikale Ausdehnung des Hohlraums. Dies ermöglicht die Verwendung einer konvex geformten wasserabgebenden Membran beispielsweise in der Form einer Halbkugel, was ebenfalls zu einer Vergrößerung der wasserabgebenden Oberfläche der Bewässerungskörper im Verhältnis zum Volumen führt. Ein relativ kleines Körpervolumen ist im Hinblick auf den Transport und die Lagerung kostengünstiger.

Ein besonders kostengünstiges und einfach herzustellendes Material für die wasserabgebende Membran ist gebrannter Feinton und/oder Feinkeramik. Überraschenderweise hat sich gezeigt, daß dieses Material in üblichen Wandstärken von ca. 1 mm bis einigen Zentimetern, insbesondere 5 mm - 2 cm, eine semipermeable Wirkung für die in Frage stehenden Salzionen besitzt. Diese Wirkung wird durch ein Brennen des Tons auf hohe Temperaturen von vorzugsweise 2800°C verbessert. Eine weitere Verbesserung der semipermeablen Eigenschaften der Membran kann durch Vorbehandlung des ungebrannten Tons mit Hilfe einer ein- oder beidseitigen Eindiffusion geeigneter Lösungen bewirkt werden. Dies ist für sich genommen bekannt und bedarf keiner weiteren Erläuterung.

Selbstverständlich kann die semipermeable Membran auch aus Kunststoff oder einem anderen geeigneten Material bestehen.

Der Fachmann ist in der Lage, einen gegebenen Bewässerungskörper so auszuführen, daß die geforderte Selbstentlüftung bei der Speisung der ersten Einlaßöffnung mit Wasser erfolgt. Vorzugsweise beruht die Selbstentlüftung hauptsächlich oder gänzlich auf der Schwerkraft, so daß keine weiteren Energiequellen benötigt werden. Zweckmäßigerweise ist mindestens die zweite Einlaßöffnung des Bewässerungskörpers im Bereich des in Betriebsstellung höchstgelegenen Punktes des Hohlraums angeordnet. Vorzugsweise gilt dies für beide Öffnungen. Bei der Erstbefüllung wird dann der Hohlraum zunächst vollständig mit Wasser befüllt, bevor das Wasser durch die zweite Einlaßöffnung im höchstgelegenen Punkt des Hohlraums zum nachgeschalteten Bewässerungskörper weiterfließt.

Die zweite Einlaßöffnung und die zugeordnete Wandöffnung in der den Hohlraum des Bewässerungskörpers begrenzenden Wand können zusammenfallen. In diesem Fall ist ein Wasseranschluß und damit eine Bohrung durch die den Hohlraum begrenzende Wand im höchstgelegenen Punkt des Hohlraums vorgesehen. Dies ist beispielsweise bei der aus der DE 297 11 236 U1 bekannten Vorrichtung zur Bewässerung von Topfpflanzen der Fall. Es ist jedoch vorteilhaft, wenn die Wandöffnung von der zweiten Einlaßöffnung räumlich beabstandet ist. Zweckmäßigerweise geschieht dies dadurch, daß die zweite Einlaßöffnung von einem Ende eines im Innern des Bewässerungskörpers angeordneten Rohres gebildet wird, dessen anderes Ende in der zugeordneten Wandöffnung mündet oder die Wand durchstößt (vorzugsweise gilt entsprechendes für die erste Einlaßöffnung). Dies gibt die Möglichkeit, die Wandöffnung an einem beliebigen Punkt der den Hohlraum begrenzenden Wand anzuordnen. Insbesondere kann es zweckmäßig sein, die Wandöffnung im unteren Teil des Bewässerungskörpers anzuordnen, damit die angeschlossenen Verbindungsleitungen nicht oberhalb der wasserabgebenden Membran verlaufen und auf diese Weise die Membran vom zu bewässernden Erdreich teilweise "abschatten". Zweckmäßig ist auch eine Ausführung, bei der der Bewässerungskörper ein wasserundurchlässiges Bodenteil aufweist, da die Wasserabgabe nach unten ins Erdreich unerwünscht sein kann. Das Bodenteil kann aus kostengünstigem Material, beispielsweise Kunststoff bestehen. Es kann herstellungstechnisch einfacher sein, eine Bohrung in diesem Material anstelle der wasserabgebenden Membran herzustellen.

Die erste und die zweite Einlaßöffnung eines Bewässerungskörpers können auch zusammenfallen.

Die auf den Bewässerungskörper als solchen gerichteten Ansprüche sind ggf. unabhängig von einer speziellen Anordnung der Bewässerungskörper in einem Bewässerungssystem eigenständig schutzwürdig.

Die Wasserspeiseeinrichtung wird im einfachsten Fall von einem Wasserreservoir gebildet, das unterirdisch oder überirdisch angeordnet sein kann. Vorteilhafterweise ist die Wasserspeiseeinrichtung etwa auf einer hydrostatischen Höhe angeordnet, die der mittleren Höhe der Bewässerungskörper entspricht. Auf diese Weise erfolgt im Mittel keine zusätzliche Druckbeaufschlagung, so daß eine Wasserförderung ausschließlich aufgrund der natürlichen Kapillar- und Osmosekräfte erfolgt. Vorteilhafterweise weicht die Höhe des Wasserreservoirs von der genannten mittleren Höhe um nicht mehr als zwei Meter, vorzugsweise nicht mehr als fünf Meter ab, um die natürlichen Druckverhältnisse nicht zu stark zu beeinflussen.

Obgleich die Erfindung einen möglichst vollständigen Verzicht auf eine Wasserdruckbeaufschlagung der Anordnung anstrebt, sind auch solche Bewässerungssysteme umfaßt, welche zusätzlich zu der Förderung durch Kapillarkräfte und osmotische Kräfte eine Förderung durch die Gravitationskraft oder Druckbeaufschlagung vorsehen. Vorzugsweise beträgt die mittlere Druckbeaufschlagung des Systems weniger als 1 bar, vorzugsweise weniger als 0,5 bar, weiter vorzugsweise weniger als 0,2 bar, um die auf Kapillarkräften und osmotischer Wirkung beruhenden Druckverhältnisse so wenig wie möglich zu beeinträchtigen. Auf diese Weise ist eine optimale selbstregulierende Versorgung der Pflanzen aufgrund des natürlichen Wasserbedarfs möglich. Es ist aber zu berücksichtigen, daß die Druckverhältnisse einzelner Bewässerungskörper stark vom mittleren Systemdruck abweichen können. Dies ist bspw. in nicht ebenem Gelände, bspw. bei einem Weinberg, der Fall. Es kann in diesem Fall erforderlich sein, die Wasserspeiseeinrichtung weit oberhalb der mittleren Höhe anzuordnen, um eine Wasserversorgung auch der am höchsten liegenden Bewässerungskörper sicherzustellen.

Zweckmäßigerweise weist das Bewässerungssystem eine Erstbefülleinrichtung auf, die mit der ersten Einlaßöffnung des ersten Bewässerungskörpers in Serie verbunden ist. Der erste Bewässerungskörper in Serie ist derjenige der beiden Endkörper, bei dem die erste Einlaßöffnung nicht mit der zweiten Einlaßöffnung eines vorgeschalteten Bewässerungskörpers verbunden ist. Die Speisung des Systems über die Erstbefülleinrichtung mit Wasser erfolgt solange, bis das Wasser am Ende der Anordnung blasenfrei austritt, wodurch die Entlüftung im wesentlichen des gesamten Systems erzielt wird. Es versteht sich, daß eine Erstbefülleinrichtung für jede einzelne serielle Anordnung von Bewässerungskörpern im System vorhanden sein kann. Dies betrifft insbesondere den Fall, daß mehrere serielle Anordnungen untereinander parallel verschaltet sind, so daß insgesamt eine flächige Anordnung entsteht.

Es sind unterschiedlichste Arten von Erstbefülleinrichtungen im Rahmen der Erfindung möglich, zum Beispiel ein überirdisch angeordnetes Wasserresevoir oder eine mit keinem oder nur geringem Wasserdruck beaufschlagte Versorgungsleitung.

Es ist auch möglich, daß die Erstbefülleinrichtung mit der Wasserspeiseeinrichtung zusammenfällt.

Die Erfindung wird im folgenden anhand vorteilhafter Ausführungsbeispiele unter Bezugnahme auf die beigefügten Figuren erläutert.

Es zeigen:
- Fig. 1: ein unterirdisch verlegtes Bewässerungssystem gemäß der vorliegenden Erfindung;
- Fig. 2: einen Querschnitt durch ein unterirdisch verlegtes Bewässerungssystem aus zwei seriell verschalteten Bewässerungskörpern;

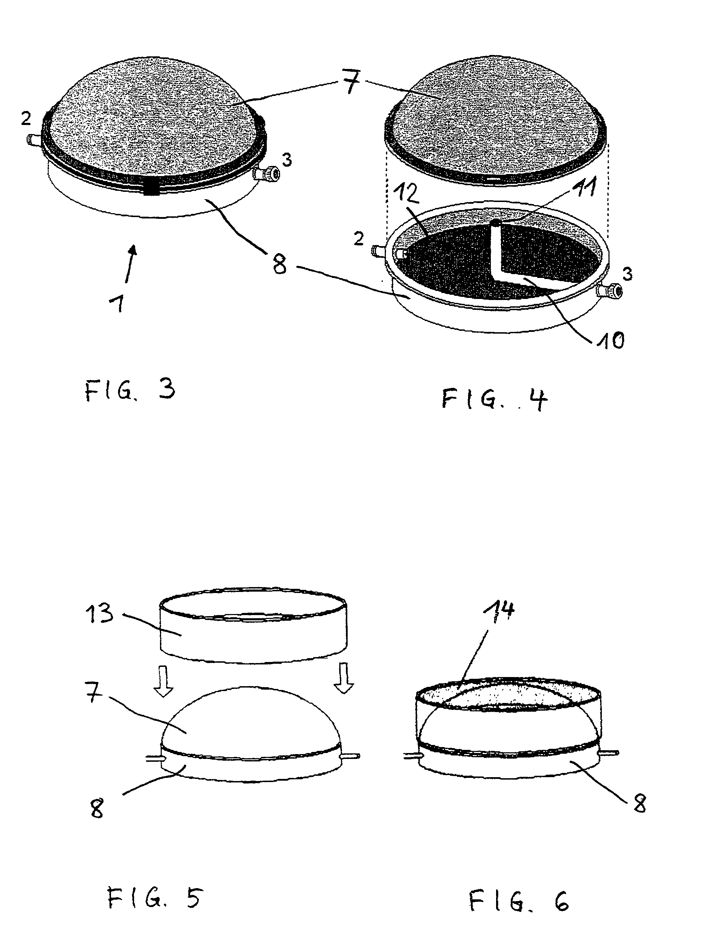

- Fig. 3: schematische Ansicht eines Bewässerungskörpers im geschlossenen Zustand;
- Fig. 4: schematische Ansicht eines Bewässerungskörpers im geöffneten Zustand;
- Fig. 5: Bewässerungskörper mit einem darauf aufzusetzenden Sandhaltering;
- Fig. 6: Bewässerungskörper mit darauf aufgesetztem Sandhaltering.

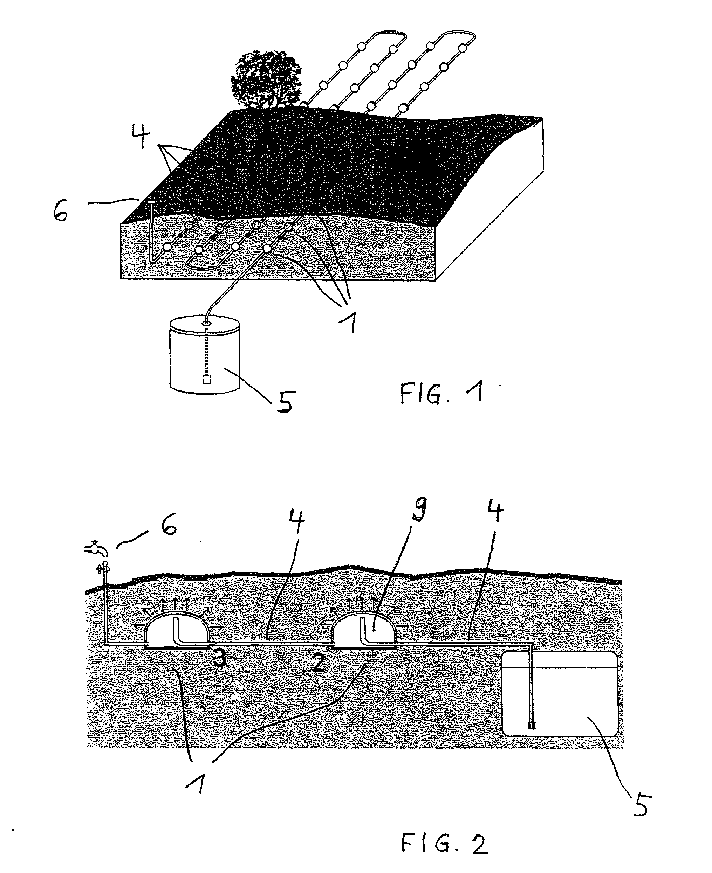

Das Bewässerungssystem umfaßt eine Mehrzahl von Bewässerungskörpern 1, die im Betriebszustand unterirdisch verlegt sind. Jeder Bewässerungskörper weist einen ersten Wasseranschluß 2 und eine zweiten Wasseranschluß 3 auf. Jeweils der zweite Wasseranschluß 3 eines Bewässerungskörpers ist mit dem ersten Wasseranschluß 2 des nachgeschalteten Bewässerungskörpers mit Hilfe von Schläuchen 4 verbunden. Dies gilt in den Fig. 1 und 2 jeweils für sämtliche Bewässerungskörper bis auf eine Ausnahme (in Fig. 2 der rechte Bewässerungskörper).

Das System aus miteinander verbundenen Bewässerungskörpern ist mit einer Wasserspeiseeinrichtung 5 über eine weitere Verbindungsleitung 4 verbunden. Bei der Wasserspeiseeinrichtung 5 handelt es sich um einen unterirdisch angeordneten Tank. Die Wasserspeiseeinrichtung 5 kann an beliebiger Stelle innerhalb der Anordnung aus Bewässerungskörpern angeordnet sein. Im Beispiel der Fig. 2 könnte der Tank 5 auch mit der die beiden Bewässerungskörper verbindenden Leitung 4 oder mit Leitung vom linken Bewässerungskörper zur Erstbefülleinrichtung 6 in Verbindung stehen.

Der erste Wasseranschluß des ersten Bewässerungskörpers in Serie ist mit einer Erstbefülleinrichtung 6 verbunden. Die Erstbefülleinrichtung 6 kann beispielsweise eine Wasserspeiseleitung oder ein Wasserreservoir sein. Ggf. kann ein Druckminderer vorgesehen sein, mit dem der gewünschte Erstbefülldruck regulierbar ist. Vorzugsweise beträgt der Erstbefülldruck weniger als 1 bar, weiter vorzugsweise weniger 0,5 bar. Auch die Wasserspeiseeinrichtung 5 kann beispielsweise durch eine Wasserspeiseleitung gebildet werden. Ggf. kann die Wasserspeiseeinrichtung und die Erstbefülleinrichtung von derselben Einrichtung gebildet werden. Zweckmäßigerweise ist in diesem Fall eine Druckreguliereinrichtung vorgesehen, so daß je nach Bedarf der gewünschte Erstbefülldruck und der gewünschte Betriebsspeisedruck einstellbar ist.

Ein Bewässerungskörper 1 besteht im wesentlichen aus einem Deckelteil 7 und einem Bodenteil 8, die im zusammengefügten Zustand einen Hohlraum 9 dicht einschließen. Deckelteil 7 und Bodenteil 8 können dauerhaft verbunden sein. Es kann beispielsweise zu Reinigungszwecken vorteilhaft sein, wenn der Deckel 7 vom Bodenteil 8 abnehmbar ist. In diesem Fall ist zweckmäßigerweise eine Dichtung zwischen Deckel- und Bodenteil vorgesehen.

Der Bodenteil ist ein flacher zylindrischer Topf aus Kunststoff und kann preisgünstig gefertigt werden. An einander gegenüberliegenden Seiten der zylindrischen Seitenwand sind Wandöffnungen für die Wasseranschlüsse 2 und 3 vorgesehen. Der Wasseranschluß 2 mündet unfern der zylindrischen Wand des Bodenteils 8 im Hohlraum 9. Die Mündung 12 bildet die erste Wassereinlaßöffnung. Der zweite Wasseranschluß 3 setzt sich innerhalb des Hohlraums durch ein abgewinkeltes Leitungsstück 10 fort. Dies verläuft zunächst rechtwinklig zur Mittelachse auf diese zu und dann entlang der Mittelachse nach oben bis unmittelbar unter den Deckelrand. Das Rohrstück mündet dort in der zweiten Wassereinlaßöffnung 11. Das Rohrstück 10 dient dazu, die Wandöffnung für den zweiten Wasseranschluß 3 im Bodenteil 8, jedoch die zweite Wassereinlaßöffnung 11 in dem im Betriebszustand höchstgelegenen Punkt des Hohlraums 9 anordnen zu können. Es ist insbesondere nicht erforderlich, den Deckelteil 7 am höchstgelegenen Punkt des Hohlraums 9 in der Betriebsstellung für den zweiten Wasseranschluß 3 zu durchstoßen.

Der Deckelteil 7 ist kuppelartig, wobei die aufgesetzte Kuppel 7 im Betriebszustand nach oben weist. Der Deckel 7 besteht im wesentlichen aus einer offenporigen Membran. Sie besteht aus sehr feinkörnigem Ton, der bei Temperaturen von vorzugsweise 2800°C gebrannt ist. Er hat mindestens teilweise semipermeable Eigenschaften. Darunter ist zu verstehen, daß die Durchlässigkeit der Membran für die im Boden gelösten Salzionen geringer ist als die Wasserdurchlässigkeit. Die Membran 7 kann durch Eindiffusion geeigneter Lösung von beiden Seiten präpariert sein, um die Semipermeabilität zu steigern, das heißt die Salzionen-Durchlässigkeit relativ zur Wasserdurchlässigkeit zu verringern. Es kann sich auch um geeignete Kunststoffmembranen handeln. Die Membran kann auch aus einem geeigneten mindestens teilweise semipermeablen Kunststoff bestehen. Die Membran 7 umspannt praktisch die gesamte Kuppel, um eine möglichst große Membranfläche zu erzielen.

Im Bewässerungsbetrieb sind die miteinander verbundenen Bewässerungskörper 1 mit dem Deckelteil 7 nach oben weisend im Erdreich angeordnet. Sie befinden sich etwa 40 cm unterhalb der Erdoberfläche. Die Membran 7 eines Bewässerungskörpers ist zwischen seinem Hohlraum und dem umgebenden Erdreich angeordnet. Der gegenseitige Abstand zweier Bewässerungskörper beträgt vorzugsweise 120 cm. Auf diese Weise ist eine flächendeckende Bewässerung einer Bodenfläche von 10 m² mit Hilfe von lediglich acht Bewässerungskörpern möglich. Der vorteilhafte Abstand von 120 cm betrifft sowohl die jeweils miteinander verbundenen Zellen als auch, bspw. bei Fig. 1, der Abstand zweier parallel angeordneter Serien von Bewässerungskörpern.

Der Innendurchmesser der Verbindungsleitungen 4 beträgt beispielsweise 6 mm. Der Innendurchmesser der Bewässerungskörper 1 beträgt beispielsweise 120 mm. Die horizontale laterale Ausdehnung des Hohlraums liegt damit um den Faktor 20 über dem Innendurchmesser der Verbindungsleitungen. Die Ausdehnung des Hohlraums 9 entlang der Mittelachse beträgt etwa 60 mm und liegt damit etwa um den Faktor 10 über dem Innendurchmesser der Verbindungsleitungen. Die Membranfläche beträgt mindestens 30%, vorzugsweise mindestens 40%, vorzugsweise mindestens 50% der Gesamtoberfläche der Bewässerungskörper 1.

Bei der Erstbefüllung des Systems wird Wasser mit Hilfe der Erstbefülleinrichtung 6 über eine Verbindungsleitung 4 in das System eingespeist. Die Verbindungsleitung ist mit dem ersten Wasseranschluß 2 des ersten Bewässerungskörpers 1 in Serie verbunden. Das Wasser gelangt durch die erste Wassereinlaßöffnung 12 in den Hohlraum 9 dieses Bewässerungskörpers. Der Hohlraum 9 wird zunächst vollständig mit Wasser gefüllt, bevor das Wasser den höchsten Punkt erreicht und von dort in die zweite Wassereinlaßöffnung 11 strömt. Durch das Rohrstück 10 gelangt das Wasser über den zweiten Wasseranschluß 3 in die nächste Verbindungsleitung 4 und von dort zur ersten Wassereinlaßöffnung 2 des nachfolgenden Bewässerungskörpers. Man erkennt, daß die Anordnung der zweiten Wassereinlaßöffnung 11 im höchsten Punkt eines Bewässerungskörpers eine einfache und kostengünstige Möglichkeit darstellt, einen Bewässerungskörper 1 selbstentlüftend auszubilden. Selbstverständlich sind die Bewässerungskörper nicht auf diese spezielle Gestaltung beschränkt. Maßgeblich ist ausschließlich ihre Eigenschaft, bei einer Speisung mit Wasser in Betriebsstellung durch die erste Wassereinlaßöffnung selbstentlüftend ausgebildet zu sein. Durch die spezielle Verschaltung der Bewässerungskörper derart, daß jeweils die zweite Einlaßöffnung eines Bewässerungskörpers 1 mit der ersten Einlaßöffnung 2 des vorgeschalteten Bewässerungskörpers verbunden ist, wird sichergestellt, daß eine Selbstentlüftung der gesamten seriellen Anordnung erreicht wird. Am Ende der seriellen Anordnung ist zweckmäßigerweise eine Entlüftungseinrichtung vorgesehen. Im Fall der Fig. 1 und 2 wäre eine Entlüftung des Tanks 5 vorgesehen. Der Tank kann auch unabhängig von der Erstbefüllung der Bewässerungskörper befüllbar sein. Bei einer Anordung des Tanks 5, die von der in den Fig. 1 und 2 am Ende der Serie abweicht, sind zweckmäßigerweise unabhängige Entlüftungseinrichtungen für den Tank 5 und das System der Bewässerungskörper vorgesehen. Bei einer unterirdischen Anordnung des Reservoirs 5 kann eine von oberhalb der Erdoberfläche ablesbare Wasserstandsanzeige vorteilhaft sein, damit ein rechtzeitiges Auffüllen des Systems nicht versäumt wird. Auch ein Alarmgeber bei niedrigem Wasserstand ist denkbar.

Nach der vollständigen Befüllung des Systems wird eine weitere Speisung des Systems durch die Erstbefülleinrichtung unterbrochen. Die im zu bewässernden Erdreich wurzelnden Pflanzen beeinflussen je nach Wasserbedarf die Salz-Ionen-Konzentration im Erdreich, so daß das osmotische Gleichgewicht zwischen dem Erdreich und dem Hohlraum 9 einer Bewässerungszelle verändert wird. Um das osmotische Druckgefälle auszugleichen, tritt Wasser aus dem Hohlraum durch die mindestens teilweise semipermeable Membran in das zu bewässernde Erdreich aus. Auch die Förderung von Wasser aus dem Hohlraum 9 in das umgebende Erdreich aufgrund von Kapillarkräften sind möglich. Die osmotischen Kräfte und die Kapillarkräfte sind die treibende Kraft für die Förderung von Wasser aus dem Hohlraum 9 in das umgebende Erdreich. Aufgrund des ausgetretenen Wassers entsteht im System ein Unterdruck, der durch Nachförderung von Wasser über die Verbindungsleitungen letztlich aus dem Reservoir 5 erfolgt. Dieses kann beispielsweise auf gleicher Höhe mit den Bewässerungskörpern oder sogar darunterliegend angeordnet sein. Eine zusätzlich Druckbeaufschlagung ist nicht erforderlich, da die Förderung mit Hilfe von osmotischen und Kapillarkräften geschieht. Vorzugsweise liegt die mittlere Druckbeaufschlagung pro Bewässerungskörper unterhalb des gewöhnlichen Wasserleitungsdrucks, unterhalb von 1 bar, damit das natürliche osmotische und kapillare Gleichgewicht durch eine Zwangsförderung von Wasser durch die Membranen der Bewässerungskörper in das Erdreich nicht gestört wird.

Im Hinblick auf die osmotische Wirkung der Membran ist es erforderlich, daß die dem Erdreich zugewandte Seite der Membran ständig mit Wasser benetzt ist. Es ist daher vorteilhaft, eine Wasserspeichereinrichtung vorzusehen, so daß dies auch bei trockenem Erdreich gewährleistet ist. Im einfachsten Fall kann es sich dabei um eine Sandschicht handeln. Bspw. kann im Anschluß an das Einsetzen eines Bewässerungskörpers in den Boden eine Schicht aus Sand aufgeschüttet und ggf. festgestampft werden. Um ein Auswandern der Sandschicht zu verhindern, ist es vorteilhaft, an der dem Erdreich zugewandten Seite des Deckelteils 7 Halteeinrichtungen für den Wasserspeicher, bspw. den Sand vorgesehen. Bei der kuppelartigen Ausführung der Membran kann es sich dabei um einen Haltering 13 handeln, der über die Kuppel gestülpt und mit Sand 14 gefüllt wird. Eine andere Möglichkeit besteht darin, in die Außenfläche des Deckelteils 7 konzentrische Rillen einzuarbeiten, die als begrenzter Wasserspeicher funktionieren. Zweckmäßigerweise wird das Erdreich im Anschluß an die Erstbefüllung des Systems einmal gründlich durchwässert, um die Voraussetzungen für einen osmotischen Austausch zu schaffen. Diese Initialbewässerung des Erdreichs zur Benetzung der Außenfläche der Membran 7 kann mit Hilfe konventioneller Methoden, bspw. einem überirdischem Begießen, erfolgen. Ggf. kann ein derartiges Durchwässern des Erdbodens nach einiger Zeit oder in regelmäßigen Abständen wiederholt werden.

## Patentansprüche

1. Bewässerungssystem mit einer Mehrzahl von unterirdisch zu verlegenden Bewässerungskörpern-(1), die jeweils mit einen mit Wasser füllbaren Hohlraum (9) und eine Einrichtung (7) zum dosierten Abgeben von Wasser aus diesem Hohlraum (9) in das umgebende Erdreich aufweisen, **gekennzeichnet durch** die folgenden Merkmale:
- jeder Bewässerungskörper (1) weist jeweils eine erste (2) und eine zweite Wassereinlaßöffnung (3) auf;
- jeder Bewässerungskörper (1) ist selbstentlüftend ausgebildet, wenn er in Betriebsstellung **durch** die erste Wassereinlaßöffnung (2) mit Wasser gespeist wird;
- die Mehrzahl von Bewässerungskörpern (1) ist dergestalt in Serie geschaltet, daß jeweils die zweite Einlaßöffnung (3) eines Bewässerungskörpers über Verbindungsleitungen (4) mit der ersten Einlaßöffnung (2) des vorgeschalteten Bewässerungskörpers verbunden ist;
- die miteinander verbundenen Bewässerungskörper (1) sind mit einer Wasserspeiseeinrichtung (5) verbunden;
- die Wasserabgabeeinrichtung (7) eines Bewässerungskörpers wird von einer mindestens teilweise semipermeablen Membran gebildet.

2. Bewässerungssystem nach Anspruch 1, **dadurch gekennzeichnet, daß** die horizontale laterale Ausdehnung des Hohlraums (9) eines Bewässerungskörpers (1) in der Betriebsstellung mindestens dreimal, vorzugsweise mindestens fünfmal, weiter vorzugsweise mindestens zehnmal so groß ist wie der Durchmesser der Verbindungsleitungen (4).

3. Bewässerungssystem nach Anspruch 1 oder 2, **dadurch gekennzeichnet, daß** die vertikale Ausdehnung des Hohlraums (9) eines Bewässerungskörpers (1) mindestens dreimal, vorzugsweise mindestens fünfmal so groß ist wie der Durchmesser der Verbindungsleitungen (4).

4. Bewässerungssystem nach einem der Ansprüche 1 bis 3, **dadurch gekennzeichnet, daß** die wasserabgebende Membran (7) offenporig mit einer Porengröße von weniger als 10.000 Å, vorzugsweise weniger als 1.000 Å, weiter vorzugsweise weniger als 100 Å, weiter vorzugsweise weniger 10 Å ist.

5. Bewässerungssystem nach einem der Ansprüche 1 oder 4, **dadurch gekennzeichnet, daß** die wasserabgebende Membran (7) aus gebranntem Feinton und/oder Feinkeramik besteht.

6. Bewässerungssystem nach Anspruch 5, **dadurch gekennzeichnet, daß** der Ton/die Keramik bei Temperaturen von mindestens 2.000 °C, vorzugsweise mindestens 2.500 °C, weiter vorzugsweise etwa 2.800 °C gebrannt ist.

7. Bewässerungssystem nach Anspruch 5 oder 6, **dadurch gekennzeichnet, daß** der Ton/die Keramik durch Eindiffusion von Lösungen vorbehandelt ist.

8. Bewässerungssystem nach einem der Ansprüche 1 bis 7, **dadurch gekennzeichnet, daß** die wasserdurchlässige Membran (7) konvex geformt und in Betriebsstellung zur Erdoberfläche weisend orientiert ist.

9. Bewässerungssystem nach einem der Ansprüche 1 bis 8, **dadurch gekennzeichnet, daß** an der zur Erdreichoberfläche weisenden Seite der wasserabgebenden Membran (7) Wasserhalteeinrichtungen (13, 14) vorgesehen sind.

10. Bewässerungssystem nach einem der Ansprüche 1 bis 9, **dadurch gekennzeichnet, daß** die Selbstentlüftung der Bewässerungskörper (1) auf der Schwerkraft beruht.

11. Bewässerungssystem nach Anspruch 10, **dadurch gekennzeichnet, daß** die zweite Wassereinlaßöffnung (11) eines Bewässerungskörpers (1) im Bereich des in Betriebsstellung höchstgelegenen Punktes des Hohlraums (9) angeordnet ist.

12. Bewässerungssystem nach einem der Ansprüche 1 bis 11, **dadurch gekennzeichnet, daß** die Bewässerungskörper (1) jeweils bezüglich einer Speisung mit Wasser sowohl durch die erste Einlaßöffnung (12) als auch durch die zweite Einlaßöffnung (11) selbstentlüftend ausgebildet sind.

13. Bewässerungssystem nach einem der Ansprüche 1 bis 12, **dadurch gekennzeichnet, daß** die der zweiten Wassereinlaßöffnung (11) zugeordnete Wandöffnung in der den Hohlraum (9) des Bewässerungskörpers (1) begrenzenden Wand von der zweiten Wassereinlaßöffnung (11) verschieden ist.

14. Bewässerungssystem nach Anspruch 13, **dadurch gekennzeichnet, daß** die der zweiten Einlaßöffnung (11) zugeordnete Wandöffnung im unteren Teil (8) des Bewässerungskörpers (1) angeordnet ist.

15. Bewässerungssystem nach einem der Ansprüche 1 bis 14, **dadurch gekennzeichnet, daß** der Bewässerungskörper (1) ein wasserundurchlässiges Bodenteil (8) aufweist.

16. Bewässerungssystem nach einem der Ansprüche 1 bis 15, **dadurch gekennzeichnet, daß** eine Erstbefülleinrichtung (6) vorgesehen ist, die mit der ersten Einlaßöffnung (12) des ersten Bewässerungskörpers in Serie verbunden ist.

## Claims

1. Irrigation system having a plurality of irrigation bodies (1) which are to be laid underground and each have a water-fillable cavity (9) and an arrangement (7) for discharging water in a metered manner from this cavity (9) into the surrounding soil, **characterized by** the following features:
- each irrigation body (1) has a first (2) and a second (3) water-inlet opening in each case;
- each irrigation body (1) is of self-venting design if it is supplied with water through the first water-inlet opening (2) in the operating position;
- the plurality of irrigation bodies (1) are connected in series such that in each case the second inlet opening (3) of one irrigation body is connected, via connecting lines (4), to the first inlet opening (2) of the upstream irrigation body;
- the interconnected irrigation bodies (1) are connected to a water-supply arrangement (5);
- the water-discharge arrangement (7) of an irrigation body is formed by an at least partially semi-permeable membrane.

2. Irrigation system according to Claim 1, **characterized in that** the horizontal lateral extent of the cavity (9) of an irrigation body (1) in the operating position is at least three times, preferably at least five times, further preferably at least ten times, the size of the diameter of the connecting lines (4).

3. Irrigation system according to Claim 1 or 2, **characterized in that** the vertical extent of the cavity (9) of an irrigation body (1) is at least three times, preferably at least five times, the size of the diameter of the connecting lines (4).

4. Irrigation system according to one of Claims 1 to 3, **characterized in that** the water-discharging membrane (7) is open-pored with a pore size of less than 10 000 Å, preferably less than 1000 Å, further preferably less than 100 Å, and further preferably less than 10 Å.

5. Irrigation system according to either of Claims 1 and 4, **characterized in that** the water-discharging membrane (7) consists of fired fine clay and/or fine ceramic material.

6. Irrigation system according to Claim 5, **characterized in that** the clay/the ceramic material is fired at temperatures of at least 2000°C, preferably at least 2500°C, further preferably approximately 2800°C.

7. Irrigation system according to Claim 5 or 6, **characterized in that** the clay/the ceramic material is pretreated by having solutions diffused into it.

8. Irrigation system according to one of Claims 1 to 7, **characterized in that** the water-permeable membrane (7) is of convex form and, in the operating position, is oriented towards the surface of the soil.

9. Irrigation system according to one of Claims 1 to 8, **characterized in that** water-retaining arrangements (13, 14) are provided on that side of the water-discharging membrane (7) which is oriented towards the soil.

10. Irrigation system according to one of Claims 1 to 9, **characterized in that** the self-venting of the irrigation bodies (1) is based on gravitational force.

11. Irrigation system according to Claim 10, **characterized in that** the second water-inlet opening (11) of an irrigation body (1) is arranged in the region of the highest point of the cavity (9) in the operating position.

12. Irrigation system according to one of Claims 1 to 11, **characterized in that** the irrigation bodies (1) are each of self-venting design in respect of being supplied with water both through the first inlet opening (12) and through the second inlet opening (11).

13. Irrigation system according to one of Claims 1 to 12, **characterized in that** that wall opening in the wall bounding the cavity (9) of the irrigation body (1) which is assigned to the second water-inlet opening (11) differs from the second water-inlet opening (11).

14. Irrigation system according to Claim 13, **characterized in that** the wall opening assigned to the second inlet opening (11) is arranged in the bottom part (8) of the irrigation body (1).

15. Irrigation system according to one of Claims 1 to 14, **characterized in that** the irrigation body (1) has a water-impermeable base part (8).

16. Irrigation system according to one of Claims 1 to 15, **characterized in that** an initial filling arrangement (6) is provided and is connected in series with the first inlet opening (12) of the first irrigation body.

## Revendications

1. Système d'irrigation avec une pluralité de corps d'irrigation (1) à poser dans le sol, qui comprennent respectivement une cavité creuse (9) pouvant être remplie d'eau et un dispositif (7) pour une distribution dosée d'eau dans la terre environnante à partir de cette cavité creuse (9), **caractérisé par** les caractéristiques suivantes :
- chaque corps d'irrigation (1) comprend respectivement une première ouverture d'entrée d'eau (2) et une deuxième ouverture d'entrée d'eau (3) ;
- chaque corps d'irrigation (1) est configuré avec une auto-ventilation lorsqu'en position de fonctionnement il est alimenté en eau par la première ouverture d'entrée d'eau (2) ;
- la pluralité de corps d'irrigation (1) est disposée de telle façon en série que respectivement la deuxième ouverture d'entrée (3) d'un corps d'irrigation est reliée par l'intermédiaire de conduites de liaison (4) avec la première ouverture d'entrée (2) du corps d'irrigation placé en amont ;
- les corps d'irrigation (1) reliés entre eux sont en liaison avec une installation d'alimentation en eau (5) et
- le dispositif de distribution d'eau (7) d'un corps d'irrigation est formé par une membrane au moins partiellement semi-perméable.

2. Système d'irrigation selon la revendication 1, **caractérisé en ce que**, dans la position de fonctionnement, l'extension horizontale latérale de la cavité creuse (9) d'un corps d'irrigation (1) est au moins trois fois, de préférence au moins cinq fois et d'une autre manière préférée au moins dix fois plus grande que le diamètre des conduites de liaison (4).

3. Système d'irrigation selon la revendication 1 ou 2, **caractérisé en ce que** l'extension verticale de la cavité creuse (9) d'un corps d'irrigation (1) est au moins trois fois, de préférence au moins cinq fois plus grande que le diamètre des conduites de liaison (4).

4. Système d'irrigation selon l'une quelconque des revendications 1 à 3, **caractérisé en ce que** la membrane de distribution d'eau (7) est à pores ouverts avec une taille de pores de moins de 10 000 Å, de préférence de moins de 1 000 Å, d'une autre manière préférée de moins de 100 Å et d'une autre manière préférée de moins de 10 Å.

5. Système d'irrigation selon l'une quelconque des revendications 1 ou 4, **caractérisé en ce que** la membrane de distribution d'eau (7) se compose d'argile fine et/ou de céramique fine cuites.

6. Système d'irrigation selon la revendication 5, **caractérisé en ce que** l'argile et/ou la céramique sont cuites à des températures d'au moins 2 000°C, de préférence d'au moins 2 500°C et d'une autre manière préférée d'environ 2 800°C.

7. Système d'irrigation selon la revendication 5 ou 6, **caractérisé en ce que** l'argile et/ou la céramique sont soumises à un traitement préliminaire par une diffusion intérieure de solutions.

8. Système d'irrigation selon l'une quelconque des revendications 1 à 7, **caractérisé en ce que** la membrane perméable à l'eau (7) a une forme convexe et est orientée vers la surface du sol lorsqu'elle se trouve dans la position de fonctionnement.

9. Système d'irrigation selon l'une quelconque des revendications 1 à 8, **caractérisé en ce que** sur le côté dirigé vers le sol de la membrane de distribution d'eau (7) sont prévus des dispositifs de retenue d'eau (13, 14).

10. Système d'irrigation selon l'une quelconque des revendications 1 à 9, **caractérisé en ce que** l'auto-ventilation des corps d'irrigation (1) repose sur la gravité.

11. Système d'irrigation selon la revendication 10, **caractérisé en ce que** la deuxième ouverture d'entrée d'eau (11) d'un corps d'irrigation (1) est disposée dans la zone du point de la cavité creuse (9) qui est le plus élevé dans la position de fonctionnement.

12. Système d'irrigation selon l'une quelconque des revendications 1 à 11, **caractérisé en ce que**, respectivement pour une alimentation en eau aussi bien par la première ouverture d'entrée (12) que par la deuxième ouverture d'entrée (11), les corps d'irrigation (1) sont configurés pour une auto-ventilation.

13. Système d'irrigation selon l'une quelconque des revendications 1 à 12, **caractérisé en ce que** l'ouverture dans la paroi associée avec la deuxième ouverture d'entrée d'eau (11) et se trouvant dans la paroi délimitant la cavité creuse (9) du corps d'irrigation (1) est différente de la deuxième ouverture d'entrée d'eau (11).

14. Système d'irrigation selon la revendication 13, **caractérisé en ce que** l'ouverture dans la paroi associée avec la deuxième ouverture d'entrée (11) est disposée dans la partie inférieure (8) du corps d'irrigation (1).

15. Système d'irrigation selon l'une quelconque des revendications 1 à 14, **caractérisé en ce que** le corps d'irrigation (1) comprend une partie de fond (8) imperméable à l'eau.

16. Système d'irrigation selon l'une quelconque des revendications 1 à 15, **caractérisé en ce qu'**il est prévu un dispositif de premier remplissage (6) qui est relié en série avec la première ouverture d'entrée (12) du premier corps d'irrigation.
